# EUROPÄISCHE PATENTANMELDUNG

(11) **EP 4 706 617 A1**
(43) Veröffentlichungstag der Anmeldung: **11.03.2026**
(21) Anmeldenummer: 25200228.2
(22) Anmeldetag: 04.09.2025
(51) Int. Cl.: A61G 5/08, A47C 4/18, A47C 5/10, A61G 5/12

(54) **VERSTELLBARER SITZ**

(30) Priorität: 06.09.2024 DE 102024125648
(71) Anmelder: John GmbH, 99830 Treffurt (DE)
(72) Erfinder: John, Sebastian, 99830 Treffurt (DE)
(74) Vertreter: Liedtke & Partner Patentanwälte

(57) **Zusammenfassung**

Die Erfindung betrifft einen verstellbarer Sitz (1), umfassend:
- ein, zwei oder mehr Sitzrohr/Sitzrohre (2) zur Befestigung einer Sitzfläche und/oder eines Sitzpolsters,
- ein, zwei oder mehr Rückenlehnenrohr/Rückenlehnenrohre (3) zur Befestigung einer Rückenlehne, wobei das Rückenlehnenrohr (3) jeweils über ein Drehgelenk (4) an jeweils einem Sitzrohr (2) befestigt ist,
- jeweils eine Faltstrebe (5) für jedes Paar aus einem Sitzrohr (2) und einem Rückenlehnenrohr (3), wobei die Faltstrebe (5) mit einem ersten Ende beabstandet vom Drehgelenk (4) direkt oder indirekt schwenkbar am Sitzrohr (2) angelenkt und mit einem zweiten Ende beabstandet vom Drehgelenk (4) schwenkbar am Rückenlehnenrohr (3) angelenkt ist, wobei die Faltstrebe (5) zwei Teilstreben (5.1, 5.2) aufweist, die durch ein Verriegelungselement (6) miteinander verbunden sind, das so ausgebildet ist, dass es die zwei Teilstreben (5.1, 5.2) in einem verriegelten Zustand starr miteinander verbindet und dass es durch Betätigung eines Betätigungselements (7) aus dem verriegelten Zustand in einen entriegelten Zustand bringbar ist, in dem die beiden Teilstreben (5.1, 5.2) um das Verriegelungselement (6) schwenkbar sind, und
- jeweils eine an der Faltstrebe (5) angeordnete Armlehne (11).

## Beschreibung

Die Erfindung betrifft einen verstellbaren Sitz.

Im Stand der Technik sind Krankenfahrstühle, Reha-Wagen und Kinderwagen bekannt, die einen verstellbaren Sitz aufweisen, bei dem eine Rückenlehne über ein verriegelbares Drehgelenk an einer Sitzfläche angelenkt ist. Die auf die Rückenlehne ausübbare Kraft ist dabei durch die Konstruktion der Verriegelung des Drehgelenks limitiert.

DE 10 2020 200 068 A1 beschreibt eine einstellbare Rückenlehne, die für einen Stuhlrahmen ausgelegt ist und ein erstes Schwenkelement, ein zweites Schwenkelement, eine Rückenlehnen-Verschiebeanordnung und ein Rückenlehnen-Verbindungselement aufweist. Das zweite Schwenkelement ist zum ersten Schwenkelement schwenkbar. Die Rückenlehnen-Verschiebeanordnung ist am ersten Schwenkelement verschiebbar angeordnet.

Das Rückenlehnen-Verbindungselement ist zwischen dem ersten Schwenkelement und dem zweiten Schwenkelement angeordnet. Ein erstes Ende des Rückenlehnen-Verbindungselements ist zur Rückenlehnen-Verschiebeanordnung schwenkbar. Ein zweites Ende des Rückenlehnen-Verbindungselements ist zum zweiten Schwenkelement schwenkbar. Die Rückenlehnen-Verschiebeanordnung treibt das zweite Schwenkelement durch das Rückenlehnen-Verbindungselement zum Schwenken relativ zum ersten Schwenkelement an, wenn sich die zumindest eine Rückenlehnen-Verschiebeanordnung relativ zum ersten Schwenkelement verschiebt, um einen Rückenbereich eines Benutzers in verschiedenen Winkeln abzustützen.

Der Erfindung liegt die Aufgabe zu Grunde, einen neuartigen verstellbaren Sitz anzugeben.

Die Aufgabe wird erfindungsgemäß gelöst durch einen verstellbaren Sitz mit den Merkmalen des Anspruchs 1.

Vorteilhafte Ausgestaltungen der Erfindung sind Gegenstand der Unteransprüche.

Es wird ein verstellbarer Sitz vorgeschlagen, umfassend:
- ein, zwei oder mehr Sitzrohr/Sitzrohre zur Befestigung einer Sitzfläche und/oder eines Sitzpolsters,
- ein, zwei oder mehr Rückenlehnenrohr/Rückenlehnenrohre zur Befestigung einer Rückenlehne, wobei das Rückenlehnenrohr jeweils über ein Drehgelenk an jeweils einem Sitzrohr befestigt ist,
- jeweils eine Faltstrebe für jedes Paar aus einem Sitzrohr und einem Rückenlehnenrohr, wobei die Faltstrebe mit einem ersten Ende beabstandet vom Drehgelenk direkt oder indirekt schwenkbar am Sitzrohr angelenkt und mit einem zweiten Ende beabstandet vom Drehgelenk schwenkbar am Rückenlehnenrohr angelenkt ist, wobei die Faltstrebe zwei Teilstreben aufweist, die durch ein Verriegelungselement miteinander verbunden sind, das so ausgebildet ist, dass es die zwei Teilstreben in einem verriegelten Zustand starr miteinander verbindet und dass es durch Betätigung eines Betätigungselements aus dem verriegelten Zustand in einen entriegelten Zustand bringbar ist, in dem die beiden Teilstreben um das Verriegelungselement schwenkbar sind, und
- jeweils eine an der Faltstrebe angeordnete Armlehne.

Im verriegelten Zustand des Verriegelungselements ist daher auch das Rückenlehnenrohr in seiner Position gegenüber dem Sitzrohr generell festgelegt, während das Rückenlehnenrohr im entriegelten Zustand des Verriegelungselements nicht nur das Schwenken der beiden Teilstreben relativ zueinander, sondern auch das Schwenken des Rückenlehnenrohrs relativ zum Sitzrohr um das Drehgelenk gestattet. Auf diese Weise kann die Rückenlehne nach vorn über die Sitzfläche gefaltet werden, beispielsweise zum Verstauen und/oder zum Transport des Sitzes. Ein Verriegeln und Entriegeln des Drehgelenks selbst ist hierfür durch die Verwendung der Faltstrebe nicht erforderlich. Dabei ist die Faltstrebe in der Lage, deutlich größere Kräfte aufzunehmen als ein verriegelbares Drehgelenk. Die Armlehne faltet sich beim Falten der Rückenlehne nach vorn automatisch mit und muss dazu nicht entfernt werden.

In einer Ausführungsform ist das zweite Ende der Faltstrebe über einen Klemmverbinder am Rückenlehnenrohr angelenkt, wobei der Klemmverbinder ein Betätigungselement aufweist, wobei der Klemmverbinder in einem geklemmten Zustand kraftschlüssig am Rückenlehnenrohr fixiert ist, wobei der Klemmverbinder durch Betätigen des Betätigungselements in einen gelösten Zustand bringbar ist, in dem der Klemmverbinder entlang des Rückenlehnenrohrs verschiebbar ist. Auf diese Weise ist das Rückenlehnenrohr zumindest in einem bestimmten Bereich durch Schwenken um das Drehgelenk und ohne Entriegeln des Verriegelungselements der Faltstrebe stufenlos in seiner Neigung gegenüber dem Sitzrohr verstellbar. Die Armlehne verstellt sich beim Verstellen der Rückenlehne durch Verschieben des Klemmverbinders entlang des Rückenlehnenrohrs automatisch mit und passt sich an.

In anderen Ausführungsformen ist kein Klemmhalter vorgesehen, sondern das zweite Ende der Faltstrebe an einem fixen Punkt am Rückenlehnenrohr angelenkt.

In einer Ausführungsform ist das Drehgelenk an einem physiologischen Drehpunkt oder nahe am physiologischen Drehpunkt angeordnet. Auf diese Weise befindet sich das Drehgelenk beispielsweise auf Höhe eines Hüftgelenks einer im Sitz sitzenden Person.

In einer Ausführungsform ist jedes Sitzrohr durch mehrere fest miteinander verbundene Rohre gebildet.

In einer Ausführungsform ist das Verriegelungselement als ein Zugschnapper (Rastbolzen) ausgebildet.

In einer Ausführungsform ist das Betätigungselement für das Verriegelungselement als ein Zugknopf oder Druckknopf ausgebildet.

In einer Ausführungsform ist die Armlehne an der Teilstrebe, die am Rückenlehnenrohr angelenkt ist, angeordnet.

In einer Ausführungsform ist das Betätigungselement für den Klemmhalter als ein Klemmhebel oder Drehknauf ausgebildet.

In einer Ausführungsform ist eine Einrichtung zur Sitzwinkeleinstellung angeordnet, umfassend eine Sitzschaukel aus einem oder mehreren mit einem hinteren Ende schwenkbar im Bereich der Drehgelenke angelenkten Rohren, die im Bereich ihres vorderen Endes an verschiedenen Positionen eines Rastmechanismus einrastbar sind.

In einer Ausführungsform ist an einem Vorderbau des Sitzes eine Zugstrebe als Verstrebung für ein schwenkbar um eine Schwenkachse am Sitz angelenktes Fußende von unten angeordnet, wobei die Zugstrebe selbst durch eine weitere Schwenkachse schwenkbar in der Nähe des Sitzrohrs angelenkt ist, wobei unter dem Vorderbau ein Verschlussmechanismus angeordnet ist, in den die Zugstrebe beim Schwenken des Fußendes aus einer eingeklappten Stellung in eine Gebrauchsstellung automatisch einrastbar ist, wobei optional eine Schraube zum zusätzlichen Sichern der Zugstrebe im Verschlussmechanismus angeordnet ist.

Gemäß einem Aspekt der vorliegenden Erfindung wird ein Wagen vorgeschlagen, umfassend den oben beschriebenen verstellbarer Sitz mit Rädern, wobei ein Schiebegriff am Rückenlehnenrohr oder an den Rückenlehnenrohren befestigt ist. Durch den Einsatz der Faltstrebe muss das Drehgelenk beim Schieben mit dem Schiebegriff kein oder ein sehr viel kleineres Drehmoment aufnehmen, als wenn das Drehgelenk selbst verriegelbar wäre. In der erfindungsgemäßen Lösung nimmt die Faltstrebe die Kräfte auf, die beim Schieben mit dem Schiebegriff auftreten. Es ergibt sich somit eine höhere Stabilität durch kleinere Hebelwirkung, da die Faltstrebe weiter oben an der Rückenlehne befestigt ist. Durch die Möglichkeit, den Schiebegriff an der Rückenlehne zu befestigen, können Bauteile und Gewicht gespart werden.

In einer Ausführungsform ist der Wagen als Krankenfahrstuhl, Reha-Wagen oder Kinderwagen ausgebildet.

In einer Ausführungsform ist ein Adapter zur Montage eines Vorderrads oder einer Fahrraddeichsel am Sitz angeordnet.

In einer Ausführungsform umfasst der Adapter ein Halteblech an einem Fußende des Sitzes und eine im Halteblech aufnehmbare Adapterplatte, die mit dem Vorderrad oder der Fahrraddeichsel verbunden ist, wobei im Halteblech eine Lasche zum Eingriff einer an der Adapterplatte schwenkbar angelenkten Schraube ausgebildet ist, wobei die Adapterplatte und das Halteblech optional zueinander komplementäre konische Formen aufweisen.

In einer Ausführungsform ist der Schiebegriff um eine Schwenkachse nach vorn und hinten schwenkbar ausgebildet.

Ausführungsbeispiele der Erfindung werden im Folgenden anhand von Zeichnungen näher erläutert. Darin zeigen:
- Figur 1: eine schematische Ansicht eines verstellbaren Sitzes, beispielsweise für einen Krankenfahrstuhl, einen Reha-Wagen oder einen Kinderwagen,
- Figur 2: eine schematische Ansicht einer weiteren Ausführungsform eines verstellbaren Sitzes mit einer Armlehne,
- Figur 3: eine schematische Ansicht des verstellbaren Sitzes aus Figur 2 mit nach hinten geschwenkter Rückenlehne,
- Figur 4: eine schematische Ansicht des verstellbaren Sitzes aus Figur 2 mit nach vorn gefalteter Rückenlehne,
- Figur 5: eine schematische Ansicht zweier Ausführungsformen des Sitzes zum Vergleich,
- Figur 6: eine schematische Ansicht eines Fußendes des Sitzes mit einem Vorderrad,
- Figur 7: eine weitere schematische Ansicht des Fußendes des Sitzes mit dem Vorderrad,
- Figur 8: eine schematische Ansicht des Vorderrads,
- Figur 9: eine schematische Ansicht des Fußendes des Sitzes mit einem Halteblech zur Aufnahme einer Adapterplatte,
- Figur 10: eine schematische Ansicht eines Wagens mit dem Sitz, einem Vorderrad und Hinterrädern,
- Figur 11: eine schematische Ansicht des Sitzes mit dem Fußende in einer eingeklappten Stellung,
- Figur 12: eine schematische Ansicht des Sitzes mit dem Fußende in einer Gebrauchsstellung, und
- Figur 13: eine schematische Ansicht des Sitzes mit dem Fußende in der eingeklappten Stellung und einem eingeklappten Rückenteil.

Einander entsprechende Teile sind in allen Figuren mit den gleichen Bezugszeichen versehen.

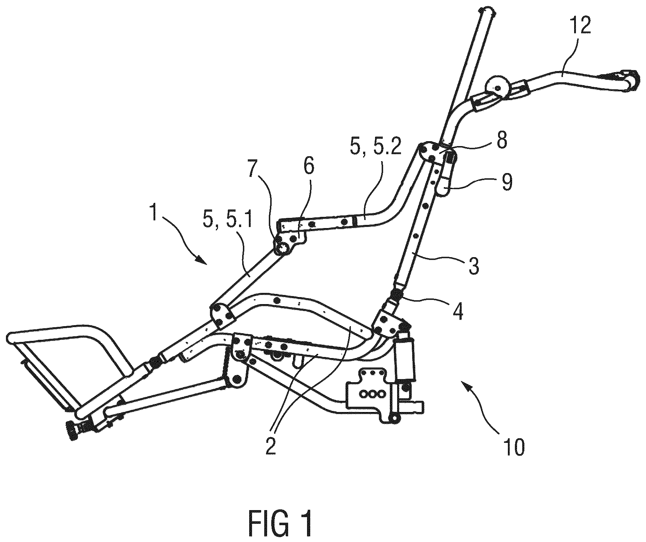

Figur 1 ist eine schematische Ansicht eines verstellbaren Sitzes 1, beispielsweise für einen Krankenfahrstuhl 10, einen Reha-Wagen 10 oder einen Kinderwagen 10 oder ein anderes Produkt. Der verstellbare Sitz 1 weist ein, zwei oder mehr Sitzrohr/Sitzrohre 2 auf, an dem oder an denen eine Sitzfläche und/oder ein Sitzpolster befestigt sein kann. Der verstellbare Sitz 1 weist ferner ein, zwei oder mehr Rückenlehnenrohr/Rückenlehnenrohre 3 auf, an dem oder an denen eine Rückenlehne befestigt sein kann. Das Rückenlehnenrohr 3 ist jeweils über ein Drehgelenk 4 an dem Sitzrohr 2 befestigt, sodass ein Winkel zwischen dem Rückenlehnenrohr 3 und dem Sitzrohr 2 (und damit auch zwischen der Rückenlehne und der Sitzfläche und/oder dem Sitzpolster) durch Drehen um das Drehgelenk 4 verändert werden kann.

Für jedes Paar aus einem Sitzrohr 2 und einem Rückenlehnenrohr 3 ist jeweils eine Faltstrebe 5 angeordnet, die mit einem ersten Ende beabstandet vom Drehgelenk 4 direkt oder indirekt schwenkbar am Sitzrohr 2 angelenkt und mit einem zweiten Ende beabstandet vom Drehgelenk 4 schwenkbar am Rückenlehnenrohr 3 angelenkt ist. Die Faltstrebe 5 weist zwei Teilstreben 5.1, 5.2 auf, die durch ein Verriegelungselement 6, beispielsweise einen Zugschnapper, miteinander verbunden sind. Das Verriegelungselement 6 ist so ausgebildet, dass es die zwei Teilstreben 5.1, 5.2 in einem verriegelten Zustand starr miteinander verbindet und dass es durch Betätigung eines Betätigungselements 7, beispielsweise eines Zugknopfes oder eines Druckknopfes, aus dem verriegelten Zustand in einen entriegelten Zustand bringbar ist, in dem die beiden Teilstreben 5.1, 5.2 um das Verriegelungselement 6 schwenkbar sind. Im verriegelten Zustand des Verriegelungselements 6 ist daher auch das Rückenlehnenrohr 3 in seiner Position gegenüber dem Sitzrohr 2 generell festgelegt, während das Rückenlehnenrohr 3 im entriegelten Zustand des Verriegelungselements 6 nicht nur das Schwenken der beiden Teilstreben 5.1, 5.2 relativ zueinander, sondern auch das Schwenken des Rückenlehnenrohrs 3 relativ zum Sitzrohr 2 um das Drehgelenk 4 gestattet. Auf diese Weise kann die Rückenlehne nach vorn über die Sitzfläche gefaltet werden, beispielsweise zum Verstauen und/oder zum Transport des Sitzes 1. Ein Verriegeln und Entriegeln des Drehgelenks 4 selbst ist hierfür durch die Verwendung der Faltstrebe 5 nicht erforderlich.

In einer Ausführungsform ist ein Schiebegriff 12 am Rückenlehnenrohr 3 oder an den Rückenlehnenrohren 3 befestigt. Durch den Einsatz der Faltstrebe 5 muss das Drehgelenk 4 beim Schieben mit dem Schiebegriff 12 kein oder ein sehr viel kleineres Drehmoment aufnehmen als wenn das Drehgelenk 4 selbst verriegelbar wäre. In der Praxis im Stand der Technik ist ein verriegelbares Drehgelenk 4 nicht imstande, ein solches Drehmoment dauerhaft aufzunehmen, sodass der Schiebegriff 12 ohne die Faltstrebe 5 nicht am Rückenlehnenrohr 3 befestigt werden kann, sondern separat am Krankenfahrstuhl 10 oder Kinderwagen 10 befestigt werden müsste. In der in Figur 1 gezeigten Lösung nimmt jedoch die Faltstrebe 5 die Kräfte auf, die beim Schieben mit dem Schiebegriff 12 auftreten. Es ergibt sich somit eine höhere Stabilität durch kleinere Hebelwirkung, da die Faltstrebe 5 weiter oben an der Rückenlehne befestigt ist. Durch die Möglichkeit, den Schiebegriff 12 an der Rückenlehne zu befestigen, können Bauteile und Gewicht gespart werden.

In einer Ausführungsform ist das zweite Ende der Faltstrebe 5 über einen Klemmverbinder 8 am Rückenlehnenrohr 3 angelenkt. Der Klemmverbinder 8 weist ein Betätigungselement 9, beispielsweise einen Klemmhebel oder Drehknauf, auf. In einem geklemmten Zustand ist der Klemmverbinder 8 kraftschlüssig am Rückenlehnenrohr 3 fixiert. Durch Betätigen des Betätigungselements 9 kann der Klemmverbinder 8 in einen gelösten Zustand gebracht werden, in dem der Klemmverbinder 8 entlang des Rückenlehnenrohrs 3 verschiebbar ist, sodass das Rückenlehnenrohr 3 zumindest in einem bestimmten Bereich durch Schwenken um das Drehgelenk 4 und ohne Entriegeln des Verriegelungselements 6 der Faltstrebe 5 stufenlos in seiner Neigung gegenüber dem Sitzrohr 2 verstellbar ist. Sobald die gewünschte Neigung erreicht ist, kann der Klemmverbinder 8 durch Betätigen des Betätigungselements 9 wieder in den geklemmten Zustand gebracht werden, in dem der Klemmverbinder 8 kraftschlüssig am Rückenlehnenrohr 3 fixiert ist. Beispielsweise kann die Rückenlehne sehr flach eingestellt werden. Dadurch ist es beispielsweise möglich, ein Kind in dem Reha-Wagen 10 zu wickeln.

In einer Ausführungsform ist das Drehgelenk 4 an einem physiologischen Drehpunkt oder nahe am physiologischen Drehpunkt angeordnet. Das heißt, dass das Drehgelenk 4 nicht genau in einem Winkel zwischen der Sitzfläche und der Rückenlehne angeordnet, sondern zur Rückenlehne zu nach oben verschoben ist. Auf diese Weise befindet sich das Drehgelenk 4 beispielsweise auf Höhe eines Hüftgelenks einer im Sitz sitzenden Person. Der Drehpunkt des Drehgelenks 4 kann jedoch frei gewählt werden.

In einer Ausführungsform kann jedes Sitzrohr 2 durch mehrere fest miteinander verbundene Rohre gebildet sein.

Die Form der Rohre kann angepasst sein, um Platz für die Arme und/oder den Oberkörper einer im Sitz 1 sitzenden Person zu erreichen.

Am Sitz 1 vorgesehene Pelotten, Kissen und/oder Kopfstützen können beim Zusammenfalten, je nach gewähltem Drehpunkt, im Sitz 1 verbleiben.

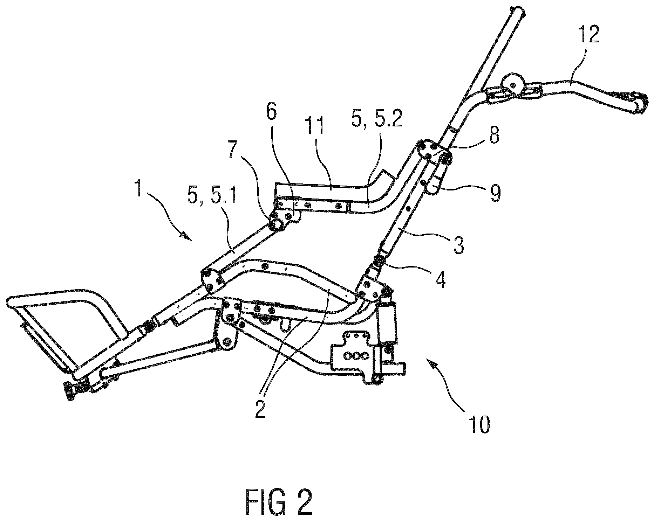

Figur 2 ist eine schematische Ansicht einer weiteren Ausführungsform eines verstellbaren Sitzes 1, beispielsweise für einen Krankenfahrstuhl 10 oder einen Kinderwagen 10 oder ein anderes Produkt. Der Sitz 1 gemäß Figur 2 stimmt weitgehend mit dem in Figur 1 gezeigten Sitz 1 überein, weist aber zusätzlich jeweils eine an der Faltstrebe 5, insbesondere an der Teilstrebe 5.1, 5.2, die am Rückenlehnenrohr 3 angelenkt ist, angeordnete Armlehne 11 auf. Die Armlehne 11 faltet sich somit beim Falten der Rückenlehne nach vorn automatisch mit und muss dazu nicht entfernt werden. Ferner verstellt sich die Armlehne 11 beim Verstellen der Rückenlehne durch Verschieben des Klemmverbinders 8 entlang des Rückenlehnenrohrs 3 automatisch mit und passt sich an. Über die Form und Länge der Rohre kann der Verstellbereich gewählt werden.

In Figur 2 ist der Sitz 1 in einer ersten Position, in der eine Person angelehnt, aber relativ aufrecht im Sitz 1 sitzen kann.

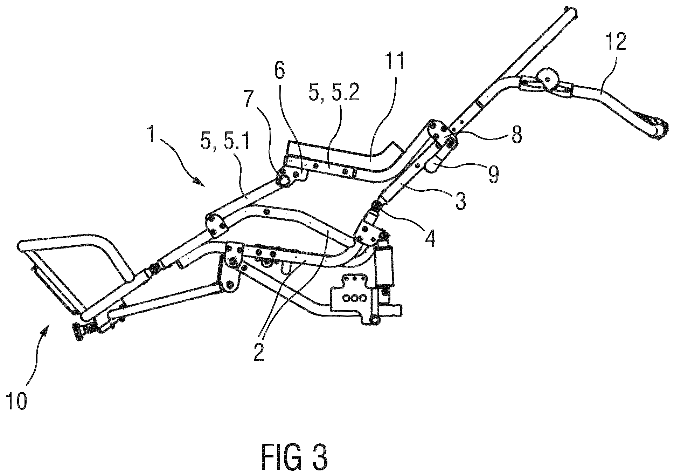

In Figur 3 wurde die Rückenlehne nach dem Lösen des Klemmverbinders 8 um das Drehgelenk 4 nach hinten geschwenkt, wobei der Klemmverbinder 8 entlang des Rückenlehnenrohrs 3 verschoben wurde. Anschließend wurde der Klemmverbinder 8 wieder an dem Rückenlehnenrohr 3 geklemmt, sodass die Rückenlehne in ihrer nunmehr flacheren Position fixiert wurde. Die Armlehne 11 hat dabei entsprechend der geänderten Position der Faltstrebe 5 ebenfalls eine veränderte Position eingenommen.

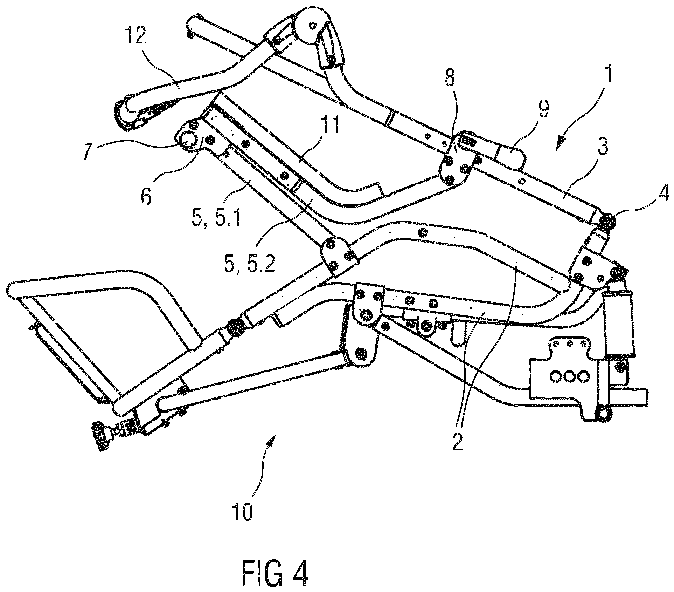

In Figur 4 wurde die Rückenlehne nach dem Entriegeln des Verriegelungselements 6 nach vorn geschwenkt und in Richtung der Sitzfläche gefaltet. Dabei wurden auch die beiden Teilstreben 5.1, 5.2 relativ zueinander um das Verriegelungselement 6 geschwenkt und aufeinander gefaltet.

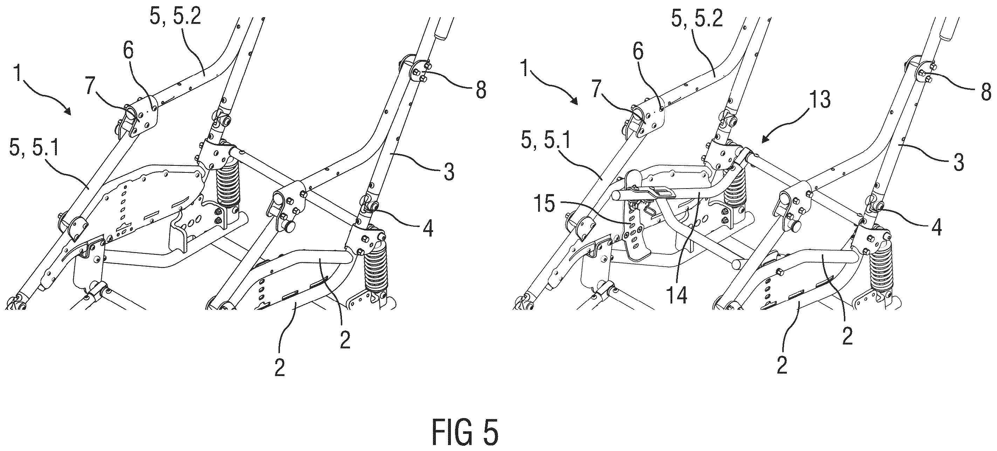

Figur 5 ist eine schematische Ansicht zweier Ausführungsformen des Sitzes 1 zum Vergleich. Auf der rechten Seite ist eine Ausführungsform mit einer Einrichtung 13 zur Sitzwinkeleinstellung gezeigt. Auf der linken Seite fehlt diese Einrichtung 13. Die Einrichtung 13 umfasst eine Sitzschaukel aus einem oder mehreren mit einem hinteren Ende schwenkbar im Bereich der Drehgelenke 4 angelenkten Rohren 14, die im Bereich ihres vorderen Endes an verschiedenen Positionen eines Rastmechanismus 15 eingerastet werden können. An der Sitzschaukel kann ein Sitzkissen mit Gurten befestigt werden.

Ein Rahmen des Sitzes 1 kann so ausgelegt sein, dass die Einrichtung 13 zur Sitzwinkeleinstellung ausgerüstet werden kann (Figur 5 rechts) oder nicht (Figur 5 links). Wenn keine Sitzschaukel verbaut ist, dann können die Gurte des Sitzkissens direkt am Rahmen und dafür vorgesehenen Durchführungen angebracht werden. Vorteil dabei ist, dass bei nicht benötigter Einrichtung 13 zur Sitzwinkeleinstellung Mehrkosten und Gewicht eingespart werden können. Diese Funktion ist jederzeit nachrüstbar und bedarf keiner Änderung der Stoffteile und des Rahmens.

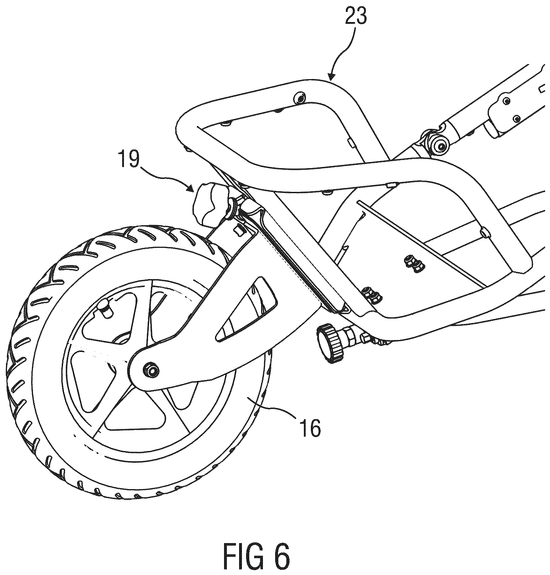

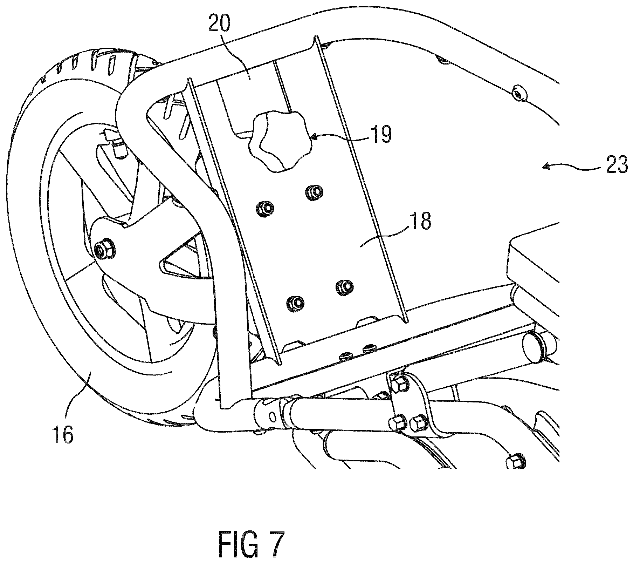

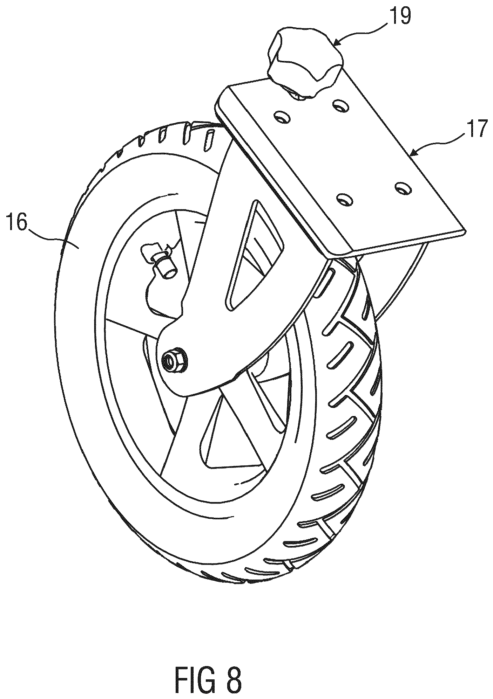

Figuren 6 und 7 sind schematische Ansichten eines Fußendes 23 des Sitzes 1 mit einem Vorderrad 16. Figur 8 ist eine schematische Ansicht des Vorderrads 16. Anstelle des Vorderrades 16 kann auch eine Fahrraddeichsel am Sitz angebracht werden.

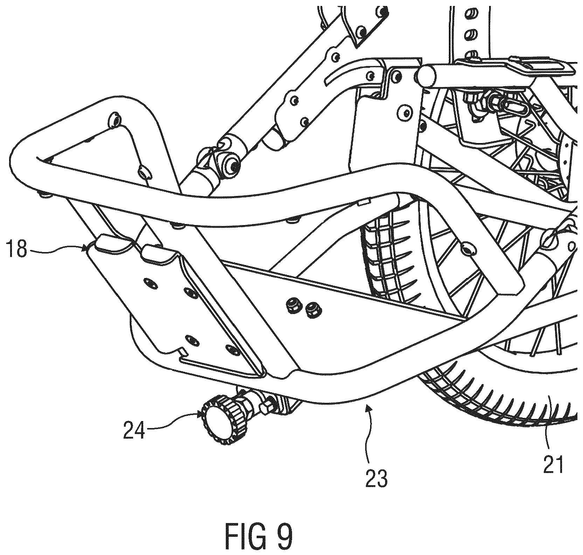

Das Wechseln des Vorderrads 16 oder der Fahrraddeichsel kann über einen Adapter mit einem Schraubverschluss ausgeführt werden. Der Adapter weist eine Adapterplatte 17 auf. Figur 9 ist eine schematische Ansicht des Fußendes 23 des Sitzes 1 mit einem Halteblech 18 zur Aufnahme der Adapterplatte 17.

Die Adapterplatte 17 kann so ausgeführt sein, dass beim Einsetzen des Vorderrads 16 dieses auch ohne Verschrauben hält und nicht herausfällt. Dies wird durch eine Lasche 20 im Halteblech 18 erreicht, in die ein mit dem Vorderrad 16 verbundenes Gegenstück, beispielsweise eine Schraube 19, hineingreift. Die Befestigung wird durch die Schraube 19 hergestellt, die an der Adapterplatte 17 schwenkbar angeordnet ist. Zum Befestigen wird die Schraube 19 mit ihrem Schraubenkopf, beispielsweise einem Sterngriff, durch die Lasche 20 geschwenkt und festgezogen. Durch diesen Adapter ist es möglich, eine spielfreie Verbindung herzustellen, ohne diesen Adapter einzustellen. Jedes Vorderrad 16 passt an jeden Wagen 10, auch aus verschiedenen Chargen. Dies kann durch eine konische Formgebung beider Teile, der Adapterplatte 17 und des Halteblechs 18, erreicht werden.

Darüber hinaus ist ein schneller Wechsel der Vorderräder 16 möglich.

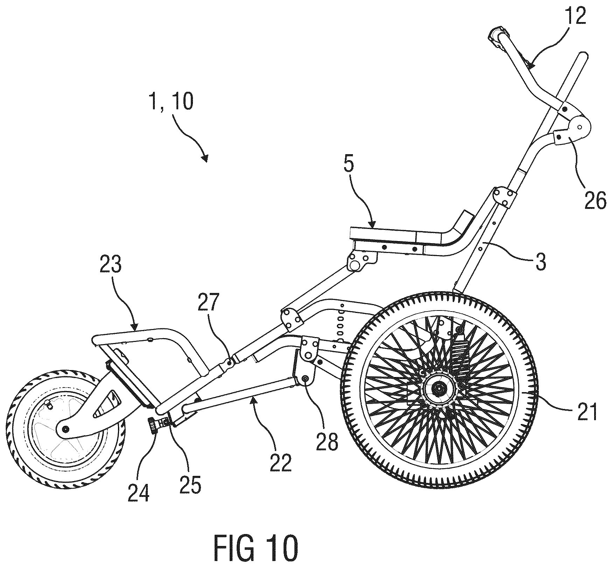

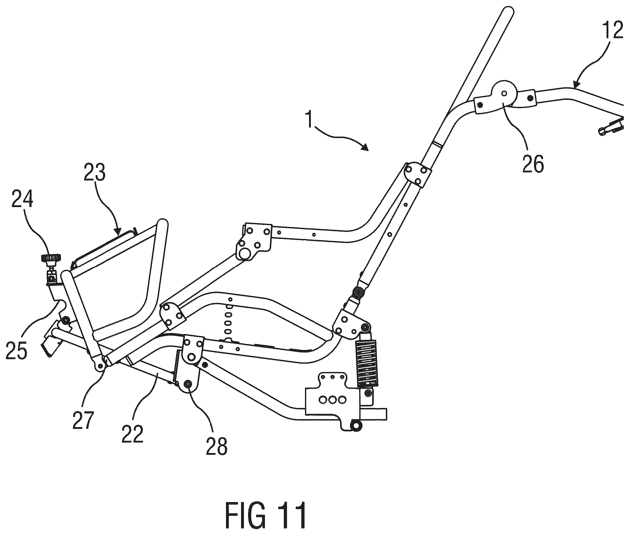

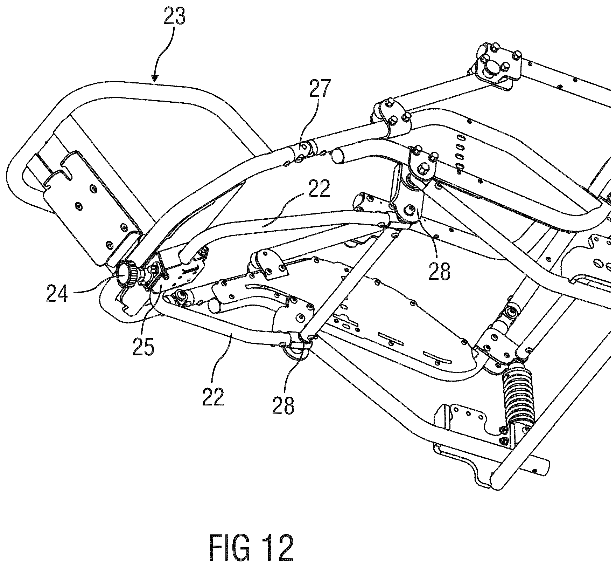

Figur 10 ist eine schematische Ansicht des Wagens 10 mit dem Sitz 1, einem Vorderrad 16 und Hinterrädern 21. In einem Vorderbau des Sitzes 1 ist eine Zugstrebe 22 als Verstrebung für das schwenkbar um eine Schwenkachse 27 am Sitz 1 angelenkte Fußende 23 von unten angeordnet. Die Zugstrebe 22 selbst ist durch eine weitere Schwenkachse 28 schwenkbar in der Nähe des Sitzrohrs 2 angelenkt. Durch einen Verschlussmechanismus 25 unter dem Vorderbau rastet die Zugstrebe 22 beim Schwenken des Fußendes 23 aus einer eingeklappten Stellung (in Figur 11 schematisch gezeigt) in eine Gebrauchsstellung (in Figur 10 gezeigt) automatisch ein und kann durch Festdrehen einer Schraube 24 zusätzlich gesichert werden. Dies wird dadurch erreicht, dass die Zugstrebe 22 in den Verschlussmechanismus 25 geführt wird. Figur 12 ist eine schematische Detailansicht des Sitzes 1 mit dem Fußende 23 in der Gebrauchsstellung.

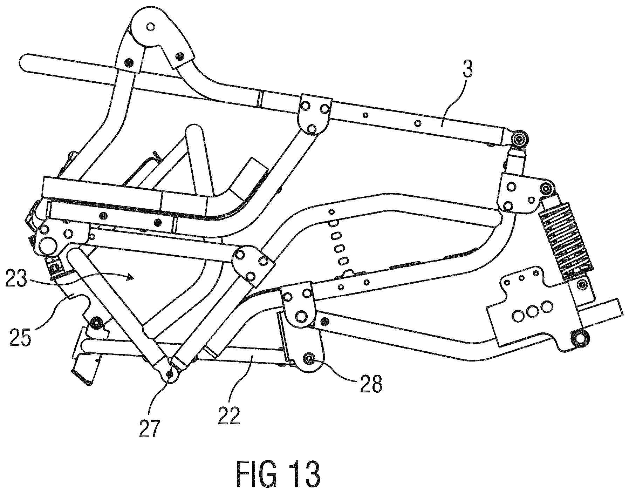

Durch die Anordnung der Zugstrebe 22 und des Faltgelenks der Faltstrebe 5 (verstellbarer Sitz 1 mit optionaler Armlehne 11) ist es möglich, den Vorderbau oder das Fußende 23 und Seitenteile und/oder Armlehnen 11 einschließlich eines Rückenbereichs des Sitzes 1 ineinander zu falten. Figur 13 ist eine schematische Ansicht des Sitzes mit dem Fußende 23 in der eingeklappten Stellung und dem eingeklappten Rückenteil.

Der Schiebegriff 12 kann so ausgeführt sein, dass er durch Schwenken um eine Schwenkachse 26 als Überrollbügel (in Figur 10 gezeigt) und als Schiebegriff (in Figur 11 gezeigt) eingestellt werden kann. In der in Figur 10 gezeigten Position ist der Wagen 10 besonders kurz und kompakt, um ihn beispielsweise in einem Aufzug zu transportieren. Dadurch wird kein zusätzlicher Überrollbügel benötigt.

### BEZUGSZEICHENLISTE

- 1: Sitz
- 2: Sitzrohr
- 3: Rückenlehnenrohr
- 4: Drehgelenk
- 5: Faltstrebe
- 5.1, 5.2: Teilstrebe
- 6: Verriegelungselement
- 7: Betätigungselement
- 8: Klemmverbinder
- 9: Betätigungselement
- 10: Krankenfahrstuhl, Reha-Wagen, Kinderwagen, Wagen
- 11: Armlehne
- 12: Schiebegriff
- 13: Einrichtung zur Sitzwinkeleinstellung
- 14: Rohr
- 15: Rastmechanismus
- 16: Vorderrad, Rad
- 17: Adapterplatte
- 18: Halteblech
- 19: Schraube
- 20: Lasche
- 21: Hinterrad, Rad
- 22: Zugstrebe
- 23: Fußende
- 24: Schraube
- 25: Verschlussmechanismus
- 26: Schwenkachse
- 27: Schwenkachse
- 28: Schwenkachse

## Patentansprüche

1. Verstellbarer Sitz (1), umfassend:
- ein, zwei oder mehr Sitzrohr/Sitzrohre (2) zur Befestigung einer Sitzfläche und/oder eines Sitzpolsters,
- ein, zwei oder mehr Rückenlehnenrohr/Rückenlehnenrohre (3) zur Befestigung einer Rückenlehne, wobei das Rückenlehnenrohr (3) jeweils über ein Drehgelenk (4) an jeweils einem Sitzrohr (2) befestigt ist,
- jeweils eine Faltstrebe (5) für jedes Paar aus einem Sitzrohr (2) und einem Rückenlehnenrohr (3), wobei die Faltstrebe (5) mit einem ersten Ende beabstandet vom Drehgelenk (4) direkt oder indirekt schwenkbar am Sitzrohr (2) angelenkt und mit einem zweiten Ende beabstandet vom Drehgelenk (4) schwenkbar am Rückenlehnenrohr (3) angelenkt ist, wobei die Faltstrebe (5) zwei Teilstreben (5.1, 5.2) aufweist, die durch ein Verriegelungselement (6) miteinander verbunden sind, das so ausgebildet ist, dass es die zwei Teilstreben (5.1, 5.2) in einem verriegelten Zustand starr miteinander verbindet und dass es durch Betätigung eines Betätigungselements (7) aus dem verriegelten Zustand in einen entriegelten Zustand bringbar ist, in dem die beiden Teilstreben (5.1, 5.2) um das Verriegelungselement (6) schwenkbar sind, und
- jeweils eine an der Faltstrebe (5) angeordnete Armlehne (11).

2. Verstellbarer Sitz (1) nach Anspruch 1, wobei das zweite Ende der Faltstrebe (5) über einen Klemmverbinder (8) am Rückenlehnenrohr (3) angelenkt ist, wobei der Klemmverbinder (8) ein Betätigungselement (9) aufweist, wobei der Klemmverbinder (8) in einem geklemmten Zustand kraftschlüssig am Rückenlehnenrohr (3) fixiert ist, wobei der Klemmverbinder (8) durch Betätigen des Betätigungselements (9) in einen gelösten Zustand bringbar ist, in dem der Klemmverbinder (8) entlang des Rückenlehnenrohrs (3) verschiebbar ist.

3. Verstellbarer Sitz (1) nach Anspruch 1 oder 2, wobei das Drehgelenk (4) an einem physiologischen Drehpunkt oder nahe am physiologischen Drehpunkt angeordnet ist.

4. Verstellbarer Sitz (1) nach einem der vorhergehenden Ansprüche, wobei jedes Sitzrohr (2) durch mehrere fest miteinander verbundene Rohre gebildet ist.

5. Verstellbarer Sitz (1) nach einem der vorhergehenden Ansprüche, wobei das Verriegelungselement (6) als ein Zugschnapper ausgebildet ist.

6. Verstellbarer Sitz (1) nach einem der vorhergehenden Ansprüche, wobei das Betätigungselement (7) für das Verriegelungselement (6) als ein Zugknopf oder Druckknopf ausgebildet ist.

7. Verstellbarer Sitz (1) nach einem der vorhergehenden Ansprüche, wobei die Armlehne (11) an der Teilstrebe (5.1, 5.2), die am Rückenlehnenrohr (3) angelenkt ist, angeordnet ist.

8. Verstellbarer Sitz (1) nach einem der Ansprüche 2 bis 7, wobei das Betätigungselement (9) für den Klemmhalter (8) als ein Klemmhebel oder Drehknauf ausgebildet ist.

9. Verstellbarer Sitz (1) nach einem der vorhergehenden Ansprüche, wobei eine Einrichtung (13) zur Sitzwinkeleinstellung angeordnet ist, umfassend eine Sitzschaukel aus einem oder mehreren mit einem hinteren Ende schwenkbar im Bereich der Drehgelenke (4) angelenkten Rohren (14), die im Bereich ihres vorderen Endes an verschiedenen Positionen eines Rastmechanismus (15) einrastbar sind.

10. Verstellbarer Sitz (1) nach einem der vorhergehenden Ansprüche, wobei in einem Vorderbau des Sitzes (1) eine Zugstrebe (22) als Verstrebung für ein schwenkbar um eine Schwenkachse (27) am Sitz (1) angelenktes Fußende (23) von unten angeordnet ist, wobei die Zugstrebe (22) selbst durch eine weitere Schwenkachse (28) schwenkbar in der Nähe des Sitzrohrs (2) angelenkt ist, wobei unter dem Vorderbau ein Verschlussmechanismus (25) angeordnet ist, in den die Zugstrebe (22) beim Schwenken des Fußendes (23) aus einer eingeklappten Stellung in eine Gebrauchsstellung automatisch einrastbar ist, wobei optional eine Schraube (24) zum zusätzlichen Sichern der Zugstrebe (22) im Verschlussmechanismus (25) angeordnet ist.

11. Wagen (10), umfassend einen verstellbaren Sitz (1) nach einem der vorhergehenden Ansprüche mit Rädern (16, 21), wobei ein Schiebegriff (12) am Rückenlehnenrohr (3) oder an den Rückenlehnenrohren (3) befestigt ist.

12. Wagen (10) nach Anspruch 11, ausgebildet als Krankenfahrstuhl (10), Reha-Wagen (10) oder Kinderwagen (10).

13. Wagen (10) nach Anspruch 11 oder 12, wobei ein Adapter zur Montage eines Vorderrads (16) oder einer Fahrraddeichsel am Sitz (1) angeordnet ist.

14. Wagen (10) nach Anspruch 13, wobei der Adapter ein Halteblech (18) an einem Fußende (23) des Sitzes (1) und eine im Halteblech (18) aufnehmbare Adapterplatte (17) aufweist, die mit dem Vorderrad (16) oder der Fahrraddeichsel verbunden ist, wobei im Halteblech (18) eine Lasche (20) zum Eingriff einer an der Adapterplatte (17) schwenkbar angelenkten Schraube (19) ausgebildet ist, wobei die Adapterplatte (17) und das Halteblech (18) optional zueinander komplementäre konische Formen aufweisen.

15. Wagen (10) nach einem der Ansprüche 11 bis 14, wobei der Schiebegriff (12) um eine Schwenkachse (26) nach vorn und hinten schwenkbar ausgebildet ist.
